# EUROPÄISCHE PATENTSCHRIFT

(11) **EP 2 412 577 B1**
(45) Veröffentlichungstag und Bekanntmachung des Hinweises auf die Patenterteilung: **05.06.2013**
(21) Anmeldenummer: 11005378.2
(22) Anmeldetag: 30.06.2011
(51) Int. Cl.: B60R 5/04, B60R 13/02

(54) **Widerlager**
Abutment device
Butée

(30) Priorität: 28.07.2010 FR 1056192
(43) Veröffentlichungstag der Anmeldung: 01.02.2012
(73) Patentinhaber: TRW Automotive Electronics & Components GmbH, 78315 Radolfzell (DE)
(72) Erfinder: Klein, Jean-Luc, 67350 Ringendorf (FR); Maurer, Jerome, 67700 Saverne (FR); Kuhm, Michel, 67340 Ingwiller (FR)
(74) Vertreter: Prinz & Partner

(56) Entgegenhaltungen:
- EP-A2- 1 447 274
- WO-A1-98/01321
- DE-A1- 19 745 874
- US-A1- 2008 179 022

## Beschreibung

Die Erfindung betrifft ein Widerlager für eine Gepäckraumabtrennung.

Gepäckraumabtrennungen dienen der blickdichten Abdeckung des Gepäckraums eines Fahrzeugs. Eine Gepäckraumabtrennung weist üblicherweise eine Abdeckung aus einem flexiblen Material auf, die zur platzsparenden Lagerung auf einer Rolle aufgewickelt werden kann. Die Rolle hat einen Aufrollmechanismus, beispielsweise mit einer Feder, die die Abdeckung, wenn diese nicht benötigt wird, automatisch auf der Rolle aufwickeln kann. Falls die Abdeckung benötigt wird, wird diese mit einem freien Rand gegen den Federwiderstand abgerollt und mit einem am freien Rand vorgesehenen Halteteil in ein Widerlager eingehakt, das auf der Innenseite des Gepäckraums vorgesehen ist. Die Abdeckung wird durch die Feder mit einer Rückzugskraft beaufschlagt, wodurch die Abdeckung zwischen Rolle und Halteteil bzw. Widerlager gespannt ist. Das Widerlager muss also die durch die Feder bereitgestellte Rückzugskraft aufnehmen können. Zudem soll das Widerlager einfach zu montieren sein.

Aus der gattungsgemäßen DE 197 45 874 A1 ist eine Halterungsanordnung für eine einen Kofferraum in einem Kombi-Fahrzeug abdeckende Hutablage bekannt. Die Hutablage ist an Auflageelementen angeordnet, die jeweils ein Klemmenteil mit einer Halteplatte und einer dieser gegenüberliegenden Befestigungsplatte aufweisen. Die Hutablage wird im Kofferraum befestigt, indem jeweils ein Klemmenteil auf einen sich nach unten erstreckenden Wandbereich aufgeschoben wird. An den Klemmplatten vorgesehene Dorne dringen dabei elastisch in den Klemmrand des Wandbereichs ein.

Die WO 98/01321 A1 zeigt eine ausziehbare Gepäckraumabdeckung, die mit Haken eingehängt werden kann. In einer bestimmten Ausführungsform kann die Rollvorrichtung der Gepäckraumabdeckung mit einer U-förmigen Feder an einer Fahrzeuginnenwand befestigt werden.

Aufgabe der Erfindung ist es, ein Widerlager für eine Gepäckraumabtrennung bereitzustellen, das eine einfache und kostengünstige Montage ermöglicht.

Erfindungsgemäß ist zu diesem Zweck ein Widerlagers für eine Gepäckraumabtrennung gemäß Anspruch 1 vorgesehen.

Das Widerlager wird hier an der Fahrzeugverkleidung befestigt. Es sind also keine weiteren Bauteile oder Befestigungspunkte, beispielsweise an der Fahrzeugkarosserie, notwendig. Das Widerlager wird auf einen Rand der Fahrzeugverkleidung aufgesetzt und gewissermaßen um diesen Rand herum gefaltet, so dass die Halteplatte auf der dem Innenraum zugewandten Seite der Fahrzeugverkleidung an dieser anliegt und die Befestigungsplatte auf der dem Fahrzeuginnenraum abgewandten Seite. Somit ist eine einfache Montage des Widerlagers im Gepäckraum des Fahrzeugs möglich.

Um ein Verdrehen des Widerlagers zu verhindern, sind die Befestigungsmittel vorzugsweise durch zwei Befestigungsbolzen und zwei Rastöffnungen gebildet. Die zwei Befestigungsbolzen erstrecken sich durch das Fahrzeugverkleidungsteil und arretieren so das Widerlager an diesem. Die Rastöffnungen sind vorzugsweise am gegenüberliegenden Teil ausgebildet, so dass die Befestigungsbolzen in diesen Rastöffnungen einrasten können. Dadurch ist eine Befestigung des Widerlagers ohne Werkzeug möglich. Die Befestigungsbolzen können bei einer exzentrischen Befestigung der Gepäckraumabtrennung das dadurch entstehende Moment aufnehmen. Das Halteteil der Abdeckung hakt gewöhnlich nicht mittig zur Befestigung des Widerlagers am Gepäckraum ein, so dass es durch die Rückzugskraft zu einer Verdrehung des Widerlagers kommen kann. Infolge einer solchen Verdrehung kann das Aushaken des Halteteils erschwert sein. Ein Verdrehen des Widerlagers ist durch die Bolzen zuverlässig ausgeschlossen, wodurch ein sicheres Einhaken und Aushaken der Gepäckraumabtrennung möglich ist

Die Befestigungsbolzen können beispielsweise an der Halteplatte angeordnet sein. In diesem Fall sind die Rastöffnungen an der Befestigungsplatte vorgesehen. Die zum Fahrzeuginnenraum gerichtete Vorderseite der Halteplatte kann so ohne zusätzliche Aussparungen, Vorsprünge oder andere in den Fahrzeuginnenraum ragende Teile ausgeführt werden, so dass ein optisch ansprechendes Widerlager zur Verfügung gestellt werden kann.

Die Halteplatte und die Befestigungsplatte sind vorzugsweise einstückig ausgebildet, sodass diese als ein einziges Bauteil gefertigt werden können. Die Herstellungs- und Montagekosten können gesenkt werden, da nur in Bauteil hergestellt werden muss und zusätzliche Montageschritte zum Zusammensetzen der einzelnen Bauteile entfallen.

In diesem Fall sind die Halteplatte und die Befestigungsplatte mit einem Scharnier verbunden, so dass diese gegeneinander verschwenkt werden können, um die Befestigungsbolzen in die Rastöffnungen einführen zu können. Das Scharnier ist vorzugsweise ein Filmscharnier. Das heißt, das Scharnier ist durch einen Falz im Kunststoffteil gebildet. Somit ist ein kostengünstiges Scharnier bzw. eine kostengünstige Verbindung der Halteplatte und der Befestigungsplatte geschaffen.

Um die Halteplatte und die Befestigungsplatte parallel zueinander ausrichten zu können, können zwischen der Halteplatte und der Befestigungsplatte zwei Filmscharniere vorgesehen sein, deren Schwenkachsen im Wesentlichen parallel zueinander verlaufen. Zwischen den beiden Filmscharnieren ist ein Distanzsteg vorgesehen, dessen Höhe der Dicke des zwischen der Halteplatte und der Befestigungsplatte aufzunehmenden Verkleidungsteils entspricht. Wäre zwischen Halteplatte und Befestigungsplatte nur ein einzelnes Scharnier vorhanden, würde beim Aufeinanderlegen der Bauteile zwischen Halteplatte und Befestigungsplatte ein V-förmiger Spalt entstehen, in dem das Verkleidungsteil gequetscht werden kann. Im Extremfall, bei nicht komprimierbaren Verkleidungsteilen, wäre ein vollständiges Schließen des Widerlagers um das Verkleidungsteil nicht möglich. Die Halteplatte, die Befestigungsplatte sowie der Distanzsteg und die Befestigungsbolzen bilden gewissermaßen ein Rechteck oder ein Parallelogramm, in dem die Halteplatte und die Befestigungsplatte die parallelen Seiten bilden. Durch den Distanzsteg ist also eine parallele Positionierung der Halteplatte und der Befestigungsplatte mit einem ausreichenden Abstand für das Verkleidungsteil möglich.

Die Aufnahmeöffnung kann beispielsweise in Richtung zum Scharnier geöffnet sein. Das Widerlager wird auf einen Rand des Fahrzeugverkleidungsteils aufgesetzt, sodass der Distanzsteg an der freien Kante aufliegt. In montiertem Zustand weist die Aufnahmeöffnung also in diesem Fall zur freien Kante der Fahrzeugverkleidung. Von dieser Richtung kann das Halteteil einfach in die Aufnahmeöffnung eingeführt werden.

Im Bereich der Aufnahmeöffnung ist des Weiteren das Scharnier unterbrochen, sodass das Halteteil von oben in die Aufnahmeöffnung eingeführt werden kann. Jedes Filmscharnier ist also vorzugsweise durch zwei Scharniersektionen gebildet, die entlang der Schwenkachse betrachtet voneinander beabstandet sind, wobei zwischen den beiden Scharniersektionen die Aufnahmeöffnung angeordnet ist.

Vorzugsweise ist die Aufnahmeöffnung zu dem Rand der Halteplatte, der der Befestigungsplatte gegenüberliegt, also dem zum Scharnier gerichteten Rand, geöffnet. In montiertem Zustand ist die Befestigungsplatte umgefaltet und das Scharnier liegt am freien Rand der Fahrzeugverkleidung an. Die Aufnahmeöffnung ist also in montiertem Zustand zum freien Rand der Fahrzeugverkleidung geöffnet, so dass das Halteteil ungehindert in die Aufnahmeöffnung eingeschoben werden kann.

Eine zusätzliche Stabilität des Widerlagers kann erzielt werden, indem am Rand der Aufnahmeöffnung ein Verstärkungssteg angeordnet ist, der sich senkrecht zur Ebene der Halteplatte erstreckt. Der Steg verbreitert die Auflagefläche für das Halteteil, wodurch das Halteteil sicherer am Widerlager gehalten ist.

Der Verstärkungssteg kann beispielsweise, wenn das Widerlager am Verkleidungsteil montiert ist, in einer Stützöffnung der Befestigungsplatte aufgenommen sein. Dadurch wird die Stabilität des Widerlagers in montiertem Zustand verbessert, da eine zusätzliche Verbindung zwischen Halteplatte und Befestigungsplatte vorhanden ist.

Um das Halteteil der Gepäckraumabtrennung sicher in der Aufnahmeöffnung zu halten, ist am Rand der Aufnahmeöffnung vorzugsweise eine elastisch federnde Arretierlasche vorgesehen, die ein versehentliches Herausrutschen des Halteteils aus der Aufnahmeöffnung verhindert.

Das Widerlager kann vorzugsweise einstückig aus Kunststoff hergestellt sein, wodurch eine kostengünstige Herstellung des Widerlagers möglich ist.

Des Weiteren ist zur Lösung der Aufgabe eine Baugruppe vorgesehen, mit einem Verkleidungsteil und einem erfindungsgemäßen Widerlager, wobei das Verkleidungsteil zwischen der Halteplatte und der Befestigungsplatte angeordnet ist und mindestens eine Aussparung aufweist, in der die Aufnahmeöffnung des Widerlagers angeordnet ist, sowie mindestens eine Öffnung für die Befestigungsmittel des Widerlagers, die sich durch die Öffnung erstrecken und die Halteplatte und die Befestigungsplatte aneinander befestigen.

Weitere Vorteile und Merkmale ergeben sich aus der nachfolgenden Beschreibung eines Ausführungsbeispiels in Verbindung mit den beigefügten Zeichnungen. In diesen zeigen:
- Figur 1 eine schematische Darstellung einer Gepäckraumabtrennung;
- Figur 2 eine perspektivische Ansicht eines erfindungsgemäßen Widerlagers in nicht montiertem Zustand;
- Figur 3 eine zweite perspektivische Ansicht des Widerlagers aus Figur 2;
- Figur 4 eine Draufsicht auf das Widerlager aus Figur 2;
- Figur 5 eine Seitenansicht des Widerlagers aus Figur 2;
- Figur 6 eine Detailansicht des Scharnierbereichs des Widerlagers aus Figur 2;
- Figur 7 das Widerlager aus Figur 2 in zusammengeklapptem Zustand;
- Figur 8 eine erfindungsgemäße Baugruppe mit dem Widerlager aus Figur 2 in einem ersten Montageschritt;
- Figur 9 die Baugruppe aus Figur 8 in einem zweiten Montageschritt; und
- Figur 10 die Baugruppe aus Figur 8 in montiertem Zustand.

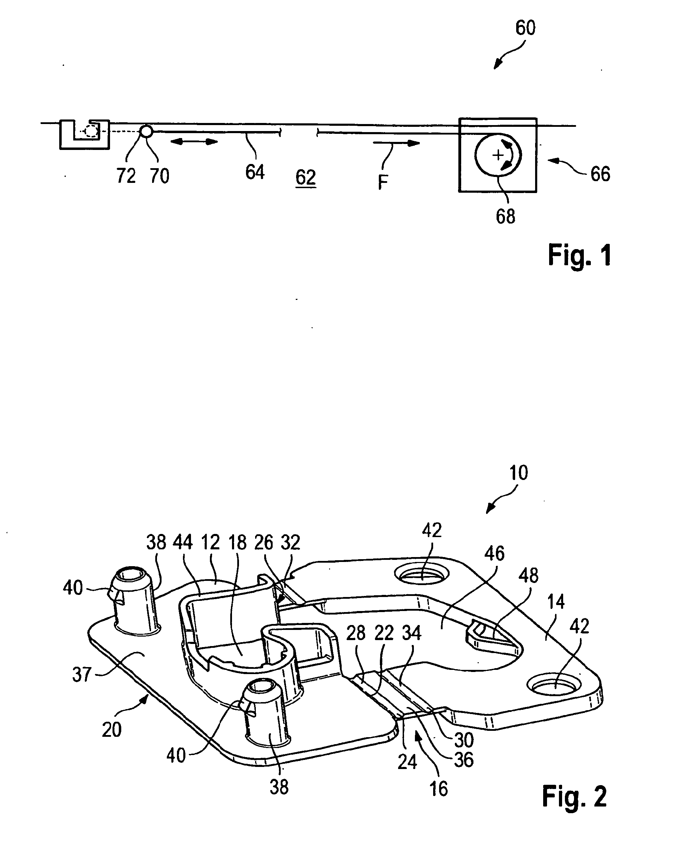

In Figur 1 ist schematisch eine Gepäckraumabtrennung 60 zur Abdeckung eines Gepäckraums 62 dargestellt. Die Gepäckraumabtrennung 60 hat eine Abdeckung 64 aus einem flexiblen Material sowie einen Aufrollmechanismus 66 ' mit einer Rolle 68, auf der die Abdeckung 64 aufgerollt werden kann. Der Aufrollmechanismus 66 hat des Weiteren eine hier nicht dargestellte Aufrollfeder, die die Rolle 68 und somit die Abdeckung 64 mit einer Rückzugskraft F beaufschlagt. Die Abdeckung 64 wird also bei Nichtgebrauch durch den Aufrollmechanismus 66 automatisch auf der Rolle 68 aufgerollt.

Zur Abdeckung des Gepäckraums 62 kann die Abdeckung 64 von der Rolle 68 abgezogen werden und mit einem Halteteil 70, das am freien Rand 72 der Abdeckung 64 vorgesehen ist, an einem Widerlager 10 eingehakt werden. Durch Aufrollfeder wird die Abdeckung 64 zwischen Widerlager 10 und Aufrollmechanismus 66 gespannt.

In Figur 2 ist das Widerlager 10 für eine solche Gepäckraumabtrennung 60 gezeigt, mit einer Halteplatte 12 und einer Befestigungsplatte 14, die einstückig mit einem Gelenkbereich 16 schwenkbar miteinander verbunden sind. Die Halteplatte 12 und die Befestigungsplatte 14 haben hier jeweils eine im Wesentlichen kongruente, trapezförmige Form, es ist aber auch denkbar, dass diese voneinander abweichende Formen aufweisen. An der Halteplatte 12 ist eine Aufnahmeöffnung 18 vorgesehen, in die, wie im Folgenden beschrieben wird, ein Halteteil 70 der Gepäckraumabtrennung 60 eingehakt werden kann.

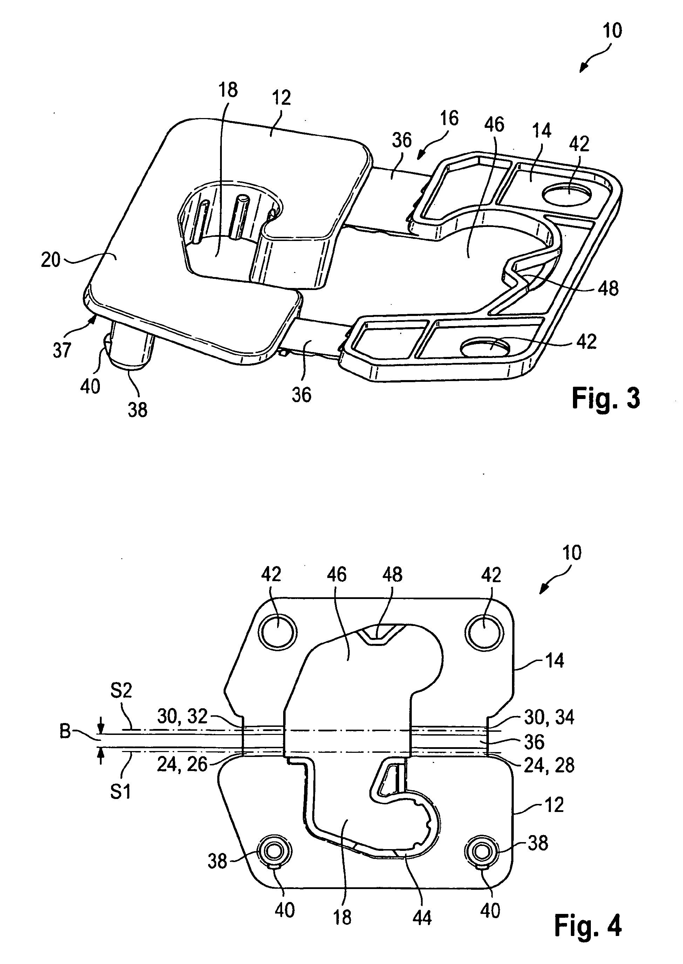

Die Halteplatte 12 hat, wie insbesondere in Figur 3 zu sehen ist, eine ebene Vorderseite 20, die in eingebautem Zustand dem Fahrzeuginnenraum zugewandt ist. Die Aufnahmeöffnung 18 ist zum dem Gelenkbereich 16 zugewandten Rand 22 geöffnet, so dass das Halteteil 70 von dieser Seite in die Aufnahmeöffnung 18 eingeschoben werden kann.

Der Gelenkbereich 16 weist, wie insbesondere in den Figuren 4 bis 6 zu sehen ist, zwei Filmscharniere 24, 30 auf, deren Schwenkachsen S1 und S2 im Wesentlichen parallel zueinander verlaufen. Die Filmscharniere 24, 30 sind durch die Aufnahmeöffnung 18 unterbrochen, so dass die Filmscharniere 24, 30 jeweils zwei Scharniersektionen 26, 28, 32, 34 aufweisen, die entlang der Schwenkachsen S1 und S2 beabstandet sind. Zwischen den Filmscharnieren 24, 30 ist ein Distanzsteg 36 mit einer über die gesamte Länge konstanten Breite B vorgesehen. Die Halteplatte 12 kann an den beiden Filmscharnieren 24, 30 so gegen die Befestigungsplatte 14 geschwenkt werden, dass diese parallel zur Befestigungsplatte 14 angeordnet ist. Der Abstand der Halteplatte 12 von der Befestigungsplatte 14 in diesem Fall der Breite B des Distanzsteges 36.

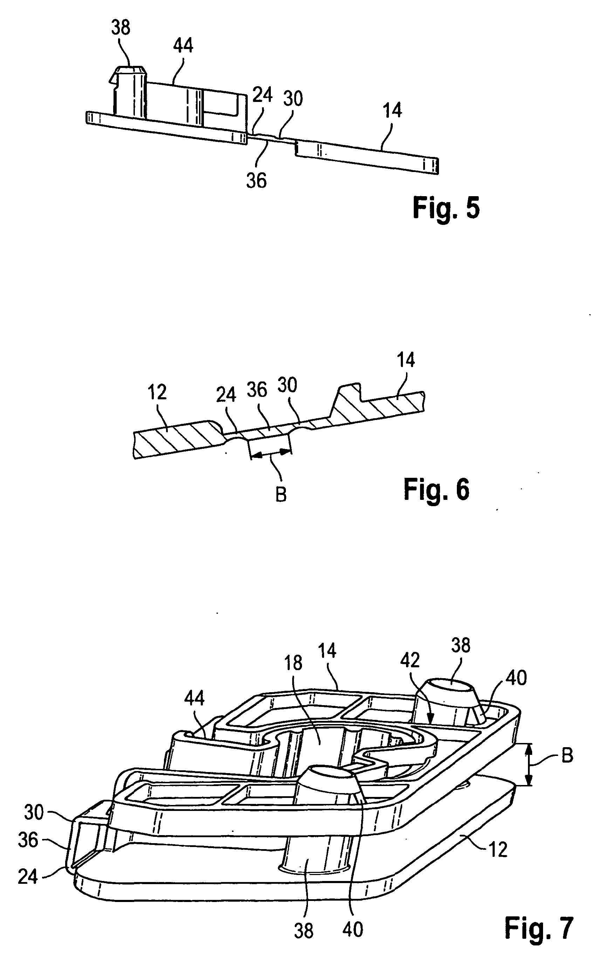

Auf der Rückseite 37 der Halteplatte 12 sind zwei Befestigungsbolzen 38 vorgesehen, die jeweils eine Rastnase 40 aufweisen. An der Befestigungsplatte 14 sind zwei Rastöffnungen 42 vorgesehen, in die die Befestigungsbolzen 38 mit den Rastnasen 40 einrasten können (Figur 7). Die Länge der Befestigungsbolzen 38 ist dabei so gewählt, dass diese die Halteplatte 12 in einem Abstand von der Befestigungsplatte 14 halten, der der Breite B des Distanzsteges 36 entspricht.

Am Rand der Aufnahmeöffnung 18 ist ein Verstärkungssteg 44 vorgesehen, der sich von der Rückseite 37 senkrecht zur Ebene der Halteplatte 12 erstreckt. An der Befestigungsplatte 14 ist eine Stützöffnung 46 vorgesehen, der so ausgebildet ist, dass der Verstärkungssteg 44 beim Zusammenklappen der Halteplatte 12 und der Befestigungsplatte 14 am Rand der Stützöffnung 46 anliegen bzw. sich durch diese durch erstrecken kann. Am Rand der Stützöffnung 46 ist eine federnde Arretierlasche 48 vorgesehen, die sich bei zusammengeklapptem Widerlager 10 in die Aufnahmeöffnung 18 erstreckt.

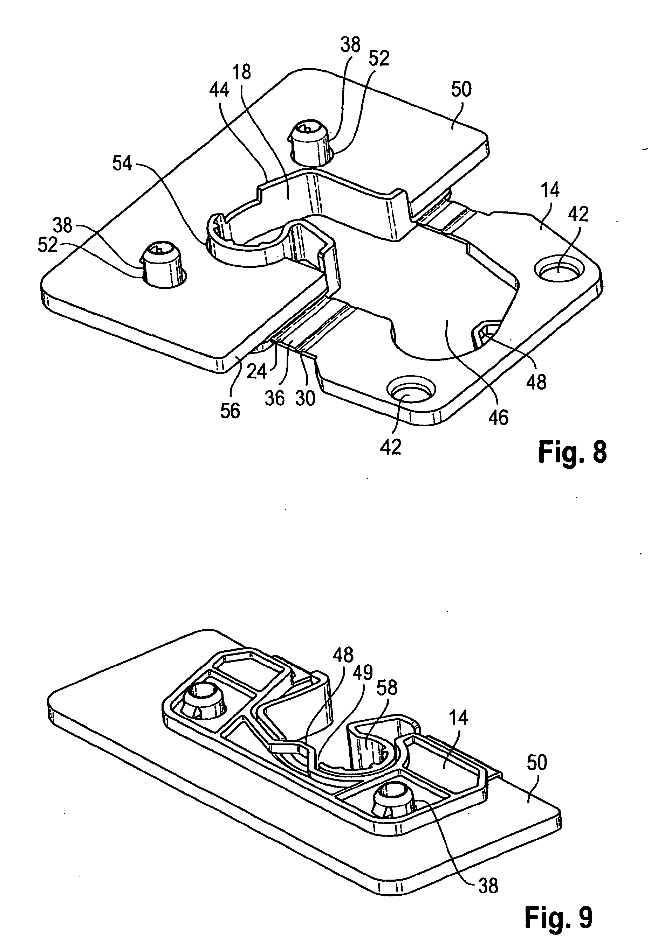

Das Widerlanger wird beispielsweise an einem freien Rand 56 der Fahrzeugverkleidung 50 montiert (Figur 8). Die Befestigungsbolzen 38 der Halteplatte 12 werden durch entsprechende Öffnungen 52 geführt, so dass die Rückseite 37 der Halteplatte 12 an der Fahrzeugverkleidung 50 anliegt. An der Fahrzeugverkleidung ist eine weitere Aussparung 54 vorgesehen, durch die sich der Verstärkungssteg 44 der Halteplatte 12 erstreckt.

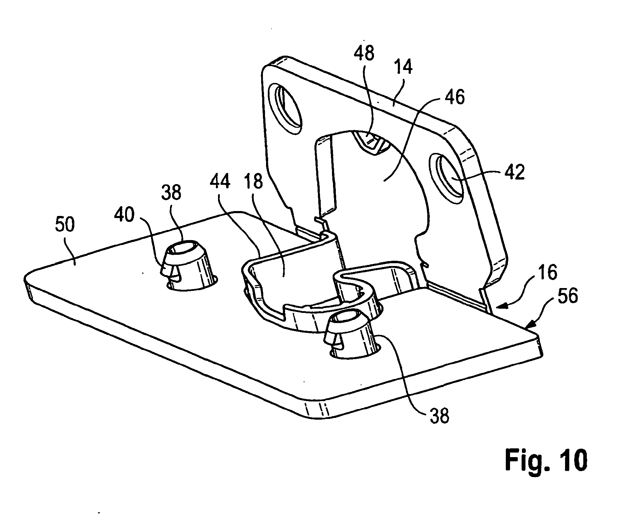

Im nächsten Montageschritt wird das erste Filmscharnier 24 um 90° angewinkelt, so dass der Distanzsteg 36 am Rand 56 der Fahrzeugverkleidung 50 anliegt (Figur 9). Anschließend wird das zweite Filmscharnier 30 um 90° angewinkelt, und dadurch die Befestigungsplatte 14 parallel zur Halteplatte 12 verschwenkt (Figur 10). Die Befestigungsbolzen 38 verrasten in dieser Position in den Rastöffnungen 42 der Befestigungsplatte 14, so dass das Widerlager 10 an der Fahrzeugverkleidung 50 fixiert ist. Die Arretierlasche 48 liegt an einem Ausschnitt 49 des Verstärkungssteges 44 an und bildet einen Anschlag, der ein zu weites Zusammenfalten der Halteplatte 12 und der Befestigungsplatte 14 verhindern.

Wie in Figur 10 zu sehen ist, ist in dieser montierten Position die Aufnahmeöffnung 18 zum freien Rand 56 der Fahrzeugverkleidung 50 geöffnet, sodass von dieser Richtung ein Halteteil 70 der Gepäckraumabtrennung 60 in die Aufnahmeöffnung 18 eingeschoben werden kann. Die Aufnahmeöffnung 18 hat vom Rand 56 aus betrachtet einen Hinterschnitt 58, in dem das Halteteil einhaken kann. Die Arretierlasche 48 grenzt an diesen Hinterschnitt 58 an und verhindert zusätzlich ein versehentliches Aushaken des Halteteils 70.

Durch die zwei Befestigungsbolzen 38 ist auch bei einer ausmittigen Belastung des Widerlagers 10 durch das in die Aufnahmeöffnung 18 eingeschobene Halteteil 70 ein sichere Befestigung des Widerlagers gewährleistet. Eine Verdrehung des Widerlagers 10 ist sicher ausgeschlossen, so dass ein sicheres Aushaken bzw. Einhaken des Halteteils 70 gewährleistet ist.

## Patentansprüche

1. Widerlager (10) für eine Gepäckraumabtrennung (60), mit einer Halteplatte (12), in der eine Aufnahmeöffnung (18) für ein Halteteil (70) der Gepäckraumabtrennung (60) ausgebildet ist, einer Befestigungsplatte (14), die bewegbar an der Halteplatte (12) angebracht ist, sodass die Halteplatte (12) gegen die Befestigungsplatte (14) geschwenkt werden kann, und Befestigungsmitteln (38, 42), mit denen die Halteplatte (12) und die Befestigungsplatte (14) im Wesentlichen parallel zueinander so aneinander angebracht werden können, dass zwischen ihnen ein Fahrzeugverkleidungsteil (50) angeordnet werden kann.

2. Widerlager nach Anspruch 1, **dadurch gekennzeichnet, dass** die Befestigungsmittel (38, 42) durch zwei Befestigungsbolzen (38) und zwei Rastöffnungen (42) gebildet sind.

3. Widerlager nach Anspruch 2, **dadurch gekennzeichnet, dass** die Befestigungsbolzen (38) an der Halteplatte (12) angeordnet sind.

4. Widerlager nach einem der vorhergehenden Ansprüche, **dadurch gekennzeichnet, dass** die Halteplatte (12) und die Befestigungsplatte (14) einstückig miteinander ausgebildet sind.

5. Widerlager nach einem der vorhergehenden Ansprüche, **dadurch gekennzeichnet, dass** zwischen der Halteplatte (12) und der Befestigungsplatte (14) zumindest ein Filmscharnier (24, 30) vorgesehen ist.

6. Widerlager nach Anspruch 5, **dadurch gekennzeichnet, dass** zwischen der Halteplatte (12) und der Befestigungsplatte (14) zwei Filmscharniere (24, 30) vorgesehen sind, deren Schwenkachsen (S1, S2) im Wesentlichen parallel zueinander verlaufen, wobei zwischen den beiden Filmscharnieren (24, 30) eine Distanzsteg (36) vorgesehen ist, dessen Höhe der Dicke des zwischen der Halteplatte (12) und der Befestigungsplatte (14) aufzunehmenden Verkleidungsteils (50) entspricht.

7. Widerlager nach Anspruch 6, **dadurch gekennzeichnet, dass** jedes Filmscharnier (24, 30) durch zwei Scharniersektionen (26, 28, 32, 34) gebildet ist, die entlang der Schwenkachse (S1, S2) betrachtet voneinander beabstandet sind, wobei zwischen den beiden Scharniersektionen (26, 28, 32, 34) die Aufnahmeöffnung (18) angeordnet ist.

8. Widerlager nach einem der vorhergehenden Ansprüche, **dadurch gekennzeichnet, dass** die Aufnahmeöffnung (18) zu dem Rand der Halteplatte (12), der der Befestigungsplatte (14) gegenüberliegt, geöffnet ist.

9. Widerlager nach einem der vorhergehenden Ansprüche, **dadurch gekennzeichnet, dass** am Rand der Aufnahmeöffnung (18) ein Verstärkungssteg (44) angeordnet ist, der sich senkrecht zur Ebene der Halteplatte (12) erstreckt.

10. Widerlager nach Anspruch 9, **dadurch gekennzeichnet, dass** der Verstärkungssteg (44), wenn das Widerlager (10) am Verkleidungsteil (50) montiert ist, in einer Stützöffnung (46) der Befestigungsplatte (14) aufgenommen ist.

11. Widerlager nach Anspruch 10, **dadurch gekennzeichnet, dass** am Rand der Stützöffnung (46) eine elastisch federnde Arretierlasche (48) vorgesehen ist.

12. Widerlager nach einem der vorhergehenden Ansprüche, **dadurch gekennzeichnet, dass** es einstückig aus Kunststoff hergestellt ist.

13. Baugruppe mit einem Fahrzeugverkleidungsteil (50) und einem Widerlager (10) nach einem der vorhergehenden Ansprüche, wobei das Verkleidungsteil (50) zwischen der Halteplatte (12) und der Befestigungsplatte (14) angeordnet ist und mindestens eine Aussparung (54) aufweist, in der die Aufnahmeöffnung (18) des Widerlagers (10) angeordnet ist, sowie mindestens eine Öffnung (52) für die Befestigungsmittel (38) des Widerlagers (10), die sich durch die Öffnung (52) erstrecken und die Halteplatte (12) und die Befestigungsplatte (14) aneinander befestigen.

## Claims

1. An abutment (10) for a trunk compartment partition (60), comprising a retaining plate (12) in which a receiving opening (18) for a holding piece (70) of the trunk compartment partition (60) is formed, a fastening plate (14) which is movably attached to the retaining plate (12), so that the retaining plate (12) can be swiveled towards the fastening plate (14), and fastening means (38, 42) by which the retaining plate (12) and the fastening plate (14) can be attached to each other so as to be substantially parallel to each other such that a vehicle lining part (50) can be arranged between them.

2. The abutment according to claim 1, **characterized in that** the fastening means (38, 42) are formed by two fastening studs (38) and two latching openings (42).

3. The abutment according to claim 2, **characterized in that** the fastening studs (38) are arranged on the retaining plate (12).

4. The abutment according to any of the preceding claims, **characterized in that** the retaining plate (12) and the fastening plate (14) are formed in one piece with each other.

5. The abutment according to any of the preceding claims, **characterized in that** at least one film hinge (24, 30) is provided between the retaining plate (12) and the fastening plate (14).

6. The abutment according to claim 5, **characterized in that** two film hinges (24, 30) are provided between the retaining plate (12) and the fastening plate (14), the swivel axes (S1, S2) of the film hinges extending substantially parallel to each other, a spacer web (36) being provided between the two film hinges (24, 30), the height of the spacer web being equal to the thickness of the lining part (50) to be received between the retaining plate (12) and the fastening plate (14).

7. The abutment according to claim 6, **characterized in that** each film hinge (24, 30) is formed by two hinge sections (26, 28, 32, 34) which are spaced apart from each other as viewed along the swivel axis (S1, S2), the receiving opening (18) being arranged between the two hinge sections (26, 28, 32, 34).

8. The abutment according to any of the preceding claims, **characterized in that** the receiving opening (18) is open towards the edge of the retaining plate (12) which faces the fastening plate (14).

9. The abutment according to any of the preceding claims, **characterized in that** a reinforcing web (44) is arranged on the edge of the receiving opening (18) and extends perpendicularly to the plane of the retaining plate (12).

10. The abutment according to claim 9, **characterized in that** the reinforcing web (44) is received in a supporting opening (46) of the fastening plate (14) when the abutment (10) is mounted to the lining part (50).

11. The abutment according to claim 10, **characterized in that** an elastically resilient arresting tab (48) is provided on the edge of the supporting opening (46).

12. The abutment according to any of the preceding claims, **characterized in that** it is made from plastic in one piece.

13. An assembly comprising a vehicle lining part (50) and an abutment (10) according to any of the preceding claims, the lining part (50) being arranged between the retaining plate (12) and the fastening plate (14) and having at least one recess (54) in which the receiving opening (18) of the abutment (10) is arranged, and at least one opening (52) for the fastening means (38) of the abutment (10) which extend through the opening (52) and fasten the retaining plate (12) and the fastening plate (14) to each other.

## Revendications

1. Butée (10) pour une séparation (60) de compartiment à bagages, comportant une plaque de support (12) dans laquelle un orifice de réception (18) pour une pièce de support (70) de la séparation (60) de compartiment à bagages est réalisé, une plaque de fixation (14) fixée de façon mobile sur la plaque de support (12), de sorte que la plaque de support (12) peut être pivotée par rapport à la plaque de fixation (14), et des moyens de fixation (38, 42) au moyen desquels la plaque de support (12) et la plaque de fixation (14) peuvent être montées l'une sur l'autre de manière sensiblement parallèle l'une par rapport à l'autre, de sorte qu'il soit possible d'agencer une pièce de revêtement (50) de véhicule entre elles.

2. Butée selon la revendication 1, **caractérisée en ce que** les moyens de fixation (38, 42) sont formés par deux boulons de fixation (38) et deux orifices d'enclenchement (42).

3. Butée selon la revendication 2, **caractérisée en ce que** les boulons de fixation (38) sont agencés sur la plaque de support (12).

4. Butée selon l'une des revendications précédentes, **caractérisée en ce que** la plaque de support (12) et la plaque de fixation (14) sont réalisées d'un seul tenant l'une avec l'autre.

5. Butée selon l'une des revendications précédentes, **caractérisée en ce qu'**au moins une charnière-film (24, 30) est prévue entre la plaque de support (12) et la plaque de fixation (14).

6. Butée selon la revendication 5, **caractérisée en ce qu'**il est prévu entre la plaque de support (12) et la plaque de fixation (14) deux charnières-film (24, 30) dont les axes de pivotement (S1, S2) s'étendent de manière sensiblement parallèle l'un par rapport à l'autre; une barrette d'écartement (36) étant prévue entre les deux charnières-film (24, 30), dont la hauteur correspond à l'épaisseur de la pièce de revêtement (50) à recevoir entre la plaque de support (12) et la plaque de fixation (14).

7. Butée selon la revendication 6, **caractérisée en ce que** chaque charnière-film (24, 30) est formée par deux sections de charnière (26, 28, 32, 34) qui, vues le long de l'axe de pivotement (S1, S2), sont espacées l'une de l'autre; l'orifice de réception (18) étant agencé entre les deux sections de charnière (26, 28, 32, 34).

8. Butée selon l'une des revendications précédentes, **caractérisée en ce que** l'orifice de réception (18) est ouvert vers le bord de la plaque de support (12) qui est opposé à la plaque de fixation (14).

9. Butée selon l'une des revendications précédentes, **caractérisée en ce qu'**une barrette de renforcement (44) qui s'étend perpendiculairement au plan de la plaque de support (12) est agencée sur le bord de l'orifice de réception (18).

10. Butée selon la revendication 9, **caractérisée en ce que** la barrette de renforcement (44) est reçue dans un orifice d'appui (46) de la plaque de fixation (14) lorsque la butée (10) est montée sur la pièce de revêtement (50).

11. Butée selon la revendication 10, **caractérisée en ce qu'**une languette d'arrêt (48) élastique à effet de ressort est prévue sur le bord de l'orifice d'appui (46).

12. Butée selon l'une des revendications précédentes, **caractérisée en ce qu'**elle est réalisée d'un seul tenant en matière plastique.

13. Ensemble comportant une pièce de revêtement (50) de véhicule et une butée (10) selon l'une des revendications précédentes; la pièce de revêtement (50) étant agencée entre la plaque de support (12) et la plaque de fixation (14) et présentant au moins un évidement (54) dans lequel est agencé l'orifice de réception (18) de la butée (10), ainsi qu'au moins un orifice (52) pour les moyens de fixation (38) de la butée (10) qui s'étendent à travers l'orifice (52) et fixent la plaque de support (12) et la plaque de fixation (14) l'une à l'autre.
